# EUROPEAN PATENT APPLICATION

(11) **EP 3 156 982 A1**
(43) Date of publication of application: **19.04.2017**
(21) Application number: 15189817.8
(22) Date of filing: 14.10.2015
(51) Int. Cl.: G07F 17/32, F21V 8/00

(54) **LIGHT-EMITTING BOARD AND GAME MACHINE USING THE SAME**

(71) Applicant: Paokai Electronic Enterprise Co., Ltd., Kaohsiung City (TW)
(72) Inventor: WEI, Ming-Shan, Kaohsiung City (TW)
(74) Representative: Louis Pöhlau Lohrentz

(57) **Abstract**

A light-emitting board and a game machine using the light-emitting board are disclosed. The game machine includes a frame (1), a controlling assembly (3) fixed to the frame (1), a controlled assembly (4) electrically connected to the controlling assembly (3), and a light-emitting board fixed to the frame (1). The light-emitting board includes a frame part (51,61,71), a refractive plate and a light-emitting assembly (54, 64, 73). The frame part (51, 61, 71) is coupled with the refractive plate (52, 62, 72) and receives the light-emitting assembly (54, 64, 73). The refractive plate (52, 62, 72) includes a plurality of light-guiding members (524, 624, 724). The light-emitting assembly (54, 64, 73) includes a light-emitting face (541, 641, 731) facing a light-receiving edge (523, 623, 723) of the refractive plate (52, 62, 72).

## Description

### BACKGROUND OF THE INVENTION

### 1. Field of the Invention

The present invention generally relates to a light-emitting board of a game machine and, more particularly, to a light-emitting board of a game machine having a simplified structure for convenient replacement or maintenance.

### 2. Description of the Related Art

Modem game machines are often designed with surface decorations (such as colored drawing) in order to attract the users' attention and to increase the revenue. However, when a game machine is placed in a game room having a variety of game machines, the game machine will not be able to effectively attract the users' attention if the colored drawing is the only decoration of the game machine. In light of this, some game machines employ a lighting effect to improve the decoration quality.

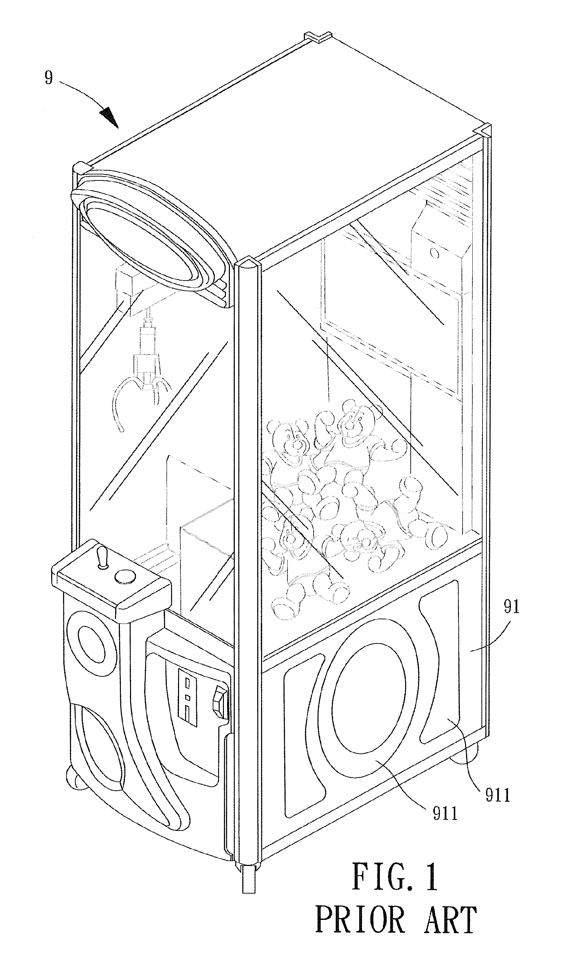

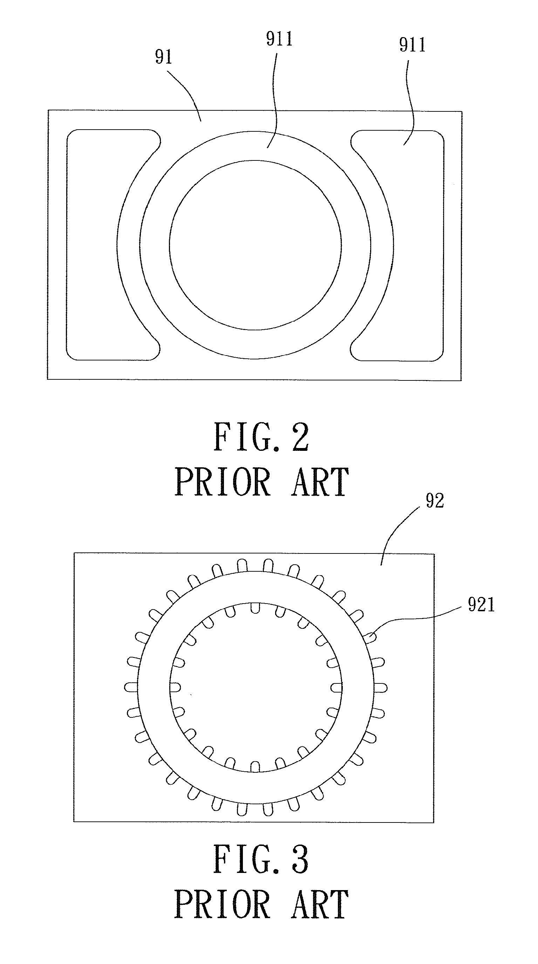

For example, FIG. 1 shows a conventional game machine 9 having a plurality of light-permeable lateral boards 91. In both FIGS. 1 and 2, each lateral board 91 includes a predetermined pattern 911. A light-emitting circuit board 92 is arranged on the inner surface of each lateral board 91. The circuit board 92 includes multi-colored light-emitting diodes (LEDs) 921 that are arranged in accordance to the predetermined pattern 911 (as shown in FIG. 3). Based on the structure, when the multi-colored LEDs 921 of the circuit board 92 generate light as controlled by a control command, the light will emit outwards through the lateral board 91 to provide a lighting effect of the predetermined pattern 911. As such, the decoration effect of the game machine 9 is improved, thereby providing an enhanced effect in attracting the users' attention. An example of such a game machine 9 may be seen in U.S Patent No. 8,251,369.

However, the multi-colored LEDs 921 need to be arranged in accordance to the predetermined pattern 911. Thus, when different predetermined patterns 911 are desired, it is required to prepare different circuit boards 92 whose LEDs 921 are arranged in correspondence to the predetermined patterns 911. However, arrangement of a variety of predetermined patterns 911 and circuit boards 92 increases the cost and results in an inventory risk. Furthermore, in the structure where the circuit board 92 is arranged behind the lateral board 91, the assembly procedure of the game machine 9 is more complex than the painted game machine. This not only increases the labor cost but also leads to a higher possibility of improper assembly.

To overcome the problems of the conventional game machine, it is necessary to provide a novel light-emitting board and a game machine using the light-emitting board. As such, it is possible to reduce the production cost, the labor cost and the inventory cost.

### SUMMARY OF THE INVENTION

It is therefore the objective of this invention to provide a game machine which has a simple structure for reducing the labor cost and the possibility of improper assembly.

It is another objective of this invention to provide a game machine whose light pattern can be changed by the replacement of a pattern layer or a refractive plate only. As such, the production and inventory costs can be reduced.

In an embodiment, a game machine with a light-emitting board includes a frame, a controlling assembly fixed to the frame, a controlled assembly electrically connected to the controlling assembly, and a light-emitting board fixed to the frame. The light-emitting board includes a frame part, a refractive plate, a pattern layer and a light-emitting assembly. The frame part is coupled with the refractive plate and receives the light-emitting assembly. The refractive plate includes a plurality of light-guiding members. The light-emitting assembly includes a light-emitting face facing a light-receiving edge of the refractive plate.

In a form shown, the refractive plate is made of a light-permeable material mixed with small pieces of metal fragments, and the small pieces of metal fragments form the plurality of light-guiding members.

In the form shown, the refractive plate includes a first light-permeable material mixed with particle-shaped objects made of a second light-permeable material. The first light-permeable material may have a refractive rate different from the second light-permeable material, as well as a melting point lower than the second light-permeable material.

In the form shown, the light-emitting board further includes a pattern layer having a light-permeable pattern, and the refractive plate includes a first face and a second face opposite to the first face. The light-receiving edge of the refractive plate extends and connects between the first face and the second face, and the pattern layer is located on the first face of the refractive plate.

In the form shown, the plurality of light-guiding members is in a form of property-changed regions or hole regions in the refractive plate, and wherein the property-changed regions or hole regions are formed by laser engraving technology.

In the form shown, the light-emitting board further includes a backboard, and the refractive plate includes a first face and a second face opposite to the first face. The light-receiving edge of the refractive plate extends and connects between the first and second faces, and the backboard is arranged on the second face of the refractive plate.

In another embodiment, a light-emitting board of a game machine includes a frame part; a refractive plate and a light-emitting assembly. The refractive plate is coupled with the frame part and includes a first face, a second face opposite to the first face, a light-receiving edge extending and connecting between the first and second faces, and a plurality of light-guiding members arranged on the first face or between the first and second faces. The light-emitting assembly is received in the frame part and includes a light-emitting face facing the light-receiving edge of the refractive plate.

In a form shown, the refractive plate is made of a light-permeable material mixed with small pieces of metal fragments, and the small pieces of metal fragments form the plurality of light-guiding members.

In the form shown, the refractive plate may include a first light-permeable material mixed with particle-shaped objects made of a second light-permeable material. The first light-permeable material has a refractive rate different from the second light-permeable material, as well as a melting point lower than the second light-permeable material.

In the form shown, the light-emitting board further includes a pattern layer having a light-permeable pattern, and the pattern layer is located on the first face of the refractive plate.

In the form shown, the plurality of light-guiding members is in a form of property-changed regions or hole regions in the refractive plate, and the property-changed regions or hole regions are formed by laser engraving technology.

In the form shown, the light-emitting board further includes a backboard, and the backboard is arranged on the second face of the refractive plate.

### BRIEF DESCRIPTION OF THE DRAWINGS

The present invention will become more fully understood from the detailed description given hereinafter and the accompanying drawings which are given by way of illustration only, and thus are not limitative of the present invention, and wherein:
FIG. 1 shows a conventional game machine.
FIG. 2 is a front view of a lateral board of the conventional game machine.
FIG. 3 is a front view of a light-emitting circuit board of the conventional game machine.
FIG. 4 shows a game machine with a light-emitting board according to an embodiment of the invention.
FIG. 5 is an exploded view of the light-emitting board of the game machine according to a first implementation.
FIG. 6 is a partial, cross sectional view of the light-emitting board of the game machine after assembly, according to the first implementation.
FIG. 7 is a partial, cross sectional view of a light-emitting board of the game machine after assembly, according to a second implementation.
FIG. 8 is a partial, cross sectional view of a light-emitting board of the game machine after assembly, according to a third implementation.

In the various figures of the drawings, the same numerals designate the same or similar parts. Furthermore, when the terms "first", "second", "third", "fourth", "inner", "outer", "top", "bottom", "front", "rear" and similar terms are used hereinafter, it should be understood that these terms have reference only to the structure shown in the drawings as it would appear to a person viewing the drawings, and are utilized only to facilitate describing the invention.

### DETAILED DESCRIPTION OF THE INVENTION

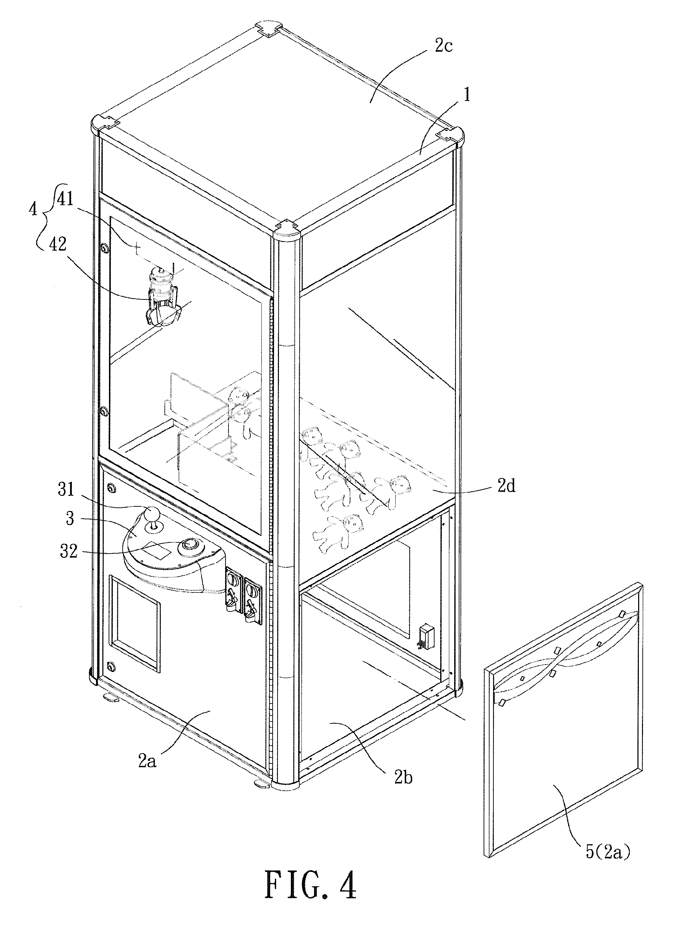

FIG. 4 shows a game machine with a light-emitting board according to an embodiment of the invention. The game machine includes a frame 1, a plurality of plates 2, a controlling assembly 3 and a controlled assembly 4. The frame 1 is used to receive and retain other structures of the game machine. The plurality of plates 2 is connected to the frame 1, and forms a lateral board 2a, a bottom board 2b, a top board 2c and an internal board 2d. The controlling assembly 3 is fixed to the frame 1 and is located outside of the chamber formed by the plates 2. Based on this, the controlling assembly 3 may be operated by the user to generate a control command. The controlled assembly 4 is electrically connected to the controlling assembly 3 and operates according to the control command. In the structure, at least one of the plurality of plates 2 is a light-emitting board 5. The detailed structure of the light-emitting board 5 is described later. Referring to FIG. 4, the game machine in the embodiment of the invention is a claw machine. In this regard, the controlling assembly 3 includes a lever 31 and/or at least one button 32, and the controlled assembly 4 includes a claw-driving unit 41 and a claw 42. However, the game machine in the invention may also be a dance machine or any other machine for game playing purposes, in which the controlling assembly 3 is in the form of a different mechanical or electronic structure and the controlled assembly 4 is in the form of a computer and a display. In other words, the claw machine is merely an example of the game machine and should not be taken as a limited sense.

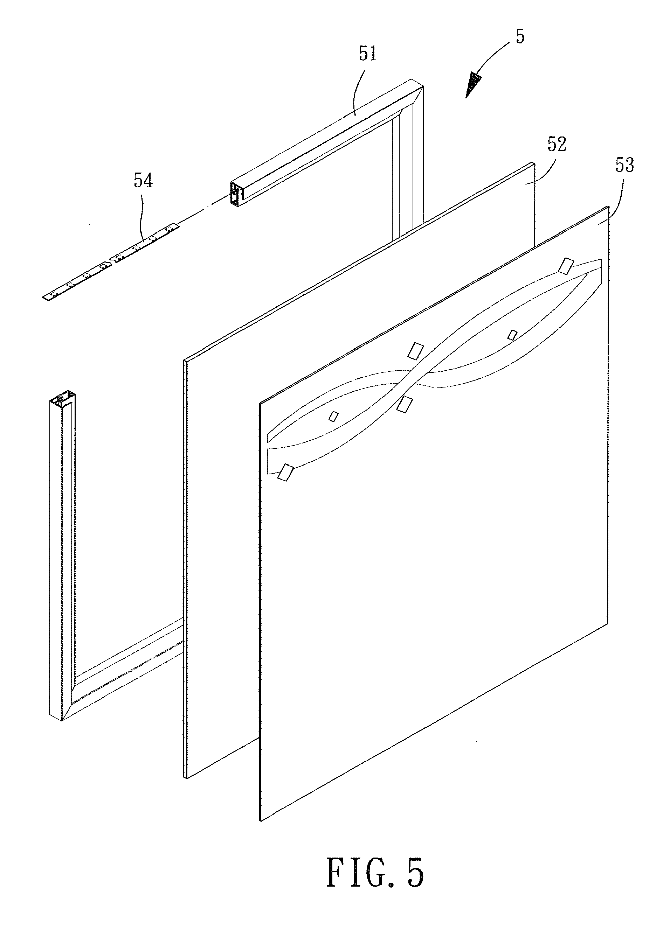

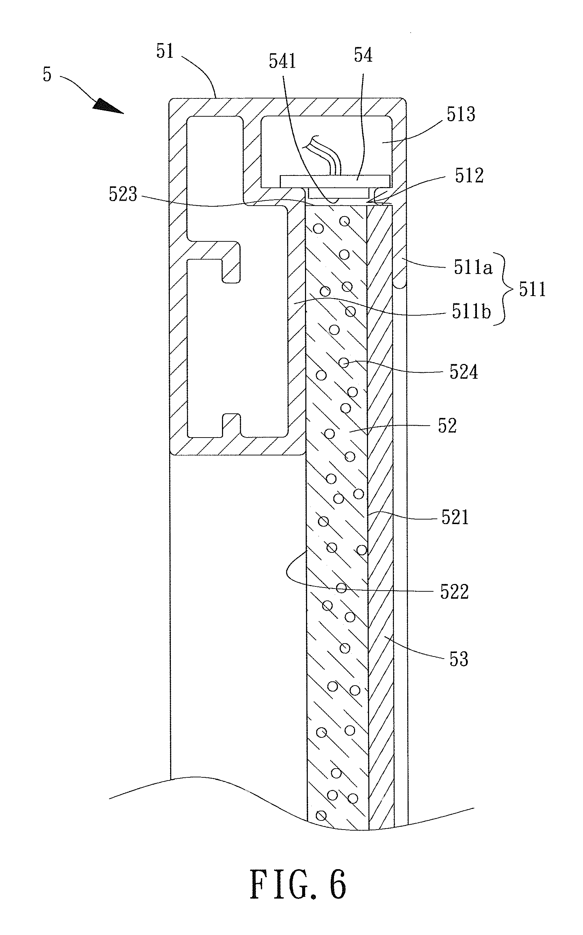

FIG. 5 shows the light-emitting board according to a first implementation thereof. The light-emitting board 5 includes a frame part 51, a refractive plate 52, a pattern layer 53 and a light-emitting assembly 54. Referring to FIG. 6, the frame part 51 of the light-emitting board 5 is coupled with the frame 1, and includes an engaging portion 511, a light channel 512 and a receiving space 513. The engaging portion 511 preferably includes an outer clamping member 511 a and an inner clamping member 511b that are located at two sides of the light channel 512, respectively. The refractive plate 52 includes a first face 521, a second face 522 opposite to the first face 521, as well as a light-receiving edge 523 extending between the first face 521 and the second face 522. The refractive plate 52 further includes a plurality of light-guiding members 524 arranged between the first face 521 and the second face 522 for deviating the light. The pattern layer 53 is located on the first face 521 of the refractive plate 52 and may include a light-permeable pattern. The refractive plate 52 and the pattern layer 53 are fixed at the engaging portion 511 of the frame part 51, and the light-receiving edge 523 of the refractive plate 52 faces the light channel 512 of the frame part 51. In the structure, the outer clamping member 511a abuts with one face of the pattern layer 53 facing away from the refractive plate 52, and the inner clamping member 511b abuts with the second face 522 of the refractive plate 52. The light-emitting assembly 54 is received in the receiving space 513 and includes a light-emitting face 541 facing the light-receiving edge 523 of the refractive plate 52 via the light channel 512. The light-emitting assembly 54 preferably consists of a plurality of multi-colored flat-panel LEDs that is arranged in a linear manner, and may be driven to emit lights by a controller (not shown).

Specifically, the refractive plate 52 may be made of a light-permeable material (such as acrylic plastic) mixed with small pieces of metal fragments. As such, the small pieces of metal fragments may form the light-guiding members 524. The refractive plate 52 may also consist of a first light-permeable material mixed with particle-shaped objects made of a second light-permeable material. The first light-permeable material has a refractive rate different from the second light-permeable material, as well as a melting point lower than the second light-permeable material. Besides, the second face 522 of the refractive plate 52 may be covered with a reflective layer (such as a reflective coating smeared on the second face 522), so as to increase the amount of light outputted through the first face 521.

Based on the structure, when the light-emitting assembly 54 emits the light which travels into the refractive plate 52 via the light channel 512 and the light-receiving edge 523, the light will be refracted by the light-guiding members 524. In this regard, the light that is refracted onto the pattern layer 53 will emit out of the light-emitting board 5 through the light-permeable pattern of the pattern layer 53. As a result, the desired lighting effect is achieved for attracting the users' attention. Moreover, when the light-emitting board 5 having a different pattern needs to be arranged on the other plate 2 or when several light-emitting boards 5 having different patterns need to be arranged on the game machine, only the pattern layer 53 needs to be replaced by a desired one. Therefore, the game machine of the invention does provide a simple structure and reduce the production cost and the possibility of improper assembly.

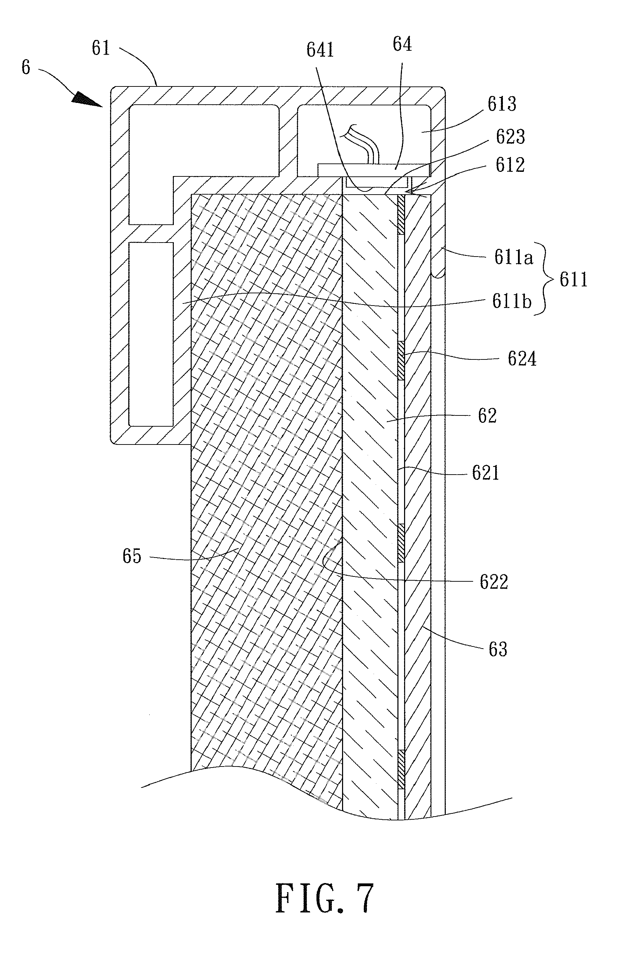

FIG. 7 shows the light-emitting board according to a second implementation thereof. The light-emitting board 6 includes a frame part 61, a refractive plate 62, a pattern layer 63 and a light-emitting assembly 64. In contrast to the light-emitting board 5 above, the light-emitting board 6 further includes a backboard 65 opposite to the pattern layer 63 and arranged on the second face 622 of the refractive plate 62. The refractive plate 62 also includes a plurality of light-guiding members 624 that is in the form of a plurality of reflective printed dots arranged on a first face 621 of the refractive plate 62. Specifically, the frame part 61 includes an engaging portion 611 having an outer clamping member 611a and an inner clamping member 611b. Based on this, the pattern layer 63, the refractive plate 62 and the backboard 65 are arranged in order and are clamped between the outer clamping member 611 a and the inner clamping member 611b. In this arrangement, the light-emitting board 6 will have an enhanced structural strength compared with the above light-emitting board 5. Besides, the second face 622 of the refractive plate 62 may also be provided with a reflective layer, so as to increase the amount of light outputted through the first face 621. Furthermore, the light-guiding members 624 may also have varying intervals according to the distances from the light-emitting assembly 64. For example, the portion of the light-guiding members 624 that is relatively adjacent to the light-emitting assembly 64 may have smaller intervals than those relatively distant to the light-emitting assembly 64, as shown in FIG. 7. As such, a uniform light-emitting effect can be provided for the first face 621.

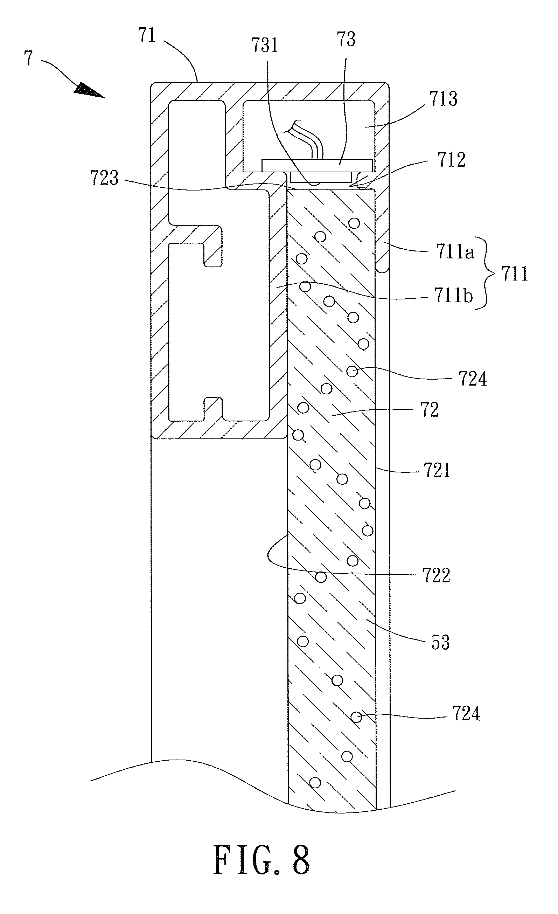

FIG. 8 shows the light-emitting board according to a third implementation thereof. The light-emitting board 7 includes a frame part 71, a refractive plate 72 and a light-emitting assembly 73. In contrast to the second implementation above, the refractive plate 72 further includes a plurality of light-guiding members 724 in addition to a first face 721, a second face 722 and a light-receiving edge 723. The light-guiding members 724 are formed in the light-permeable material of the refractive plate 72 by laser engraving technology. Specifically, the frame part 71 includes an engaging portion 711 having an outer clamping member 711 a and an inner clamping member 711b. The outer clamping member 711a and the inner clamping member 711b abut with the first face 721 and the second face 722, respectively. The light-guiding members 724 are in the form of property-changed regions or hole regions in the refractive plate 72. The property-changed regions or hole regions are formed due to the property change or vaporization of the light-permeable material of the refractive plate 72 that takes place during the laser engraving process. Since the light-guiding members 724 may be used to form a predetermined three dimensional (3D) pattern between the first face 721 and the second face 722 by means of laser engraving technology, the pattern layers 53 and 63 in the first and second implementations can be omitted in the third implementation. Besides, the second face 722 of the refractive plate 72 may also be provided with a reflective layer, so as to increase the amount of light outputted through the first face 721.

As a conclusion of the above, the installation process of the light-emitting board 5, 6, 7 into the frame 1 of the game machine can be simplified via the simple structure of the light-emitting board 5, 6, 7, thereby reducing the labor cost and the possibility of improper assembly. Moreover, since the refractive plate 52, 62 of the light-emitting board 5, 6 is able to emit light in a uniform manner along the first face 521, 621, the light pattern of the light-emitting board 5, 6 can be changed by simply replacing the pattern layer 53, 63 or the refractive plate 72 with a desired one. In this manner, the production cost and inventory risk can be reduced.

## Claims

1. A game machine with a light-emitting board, comprising:
a frame (1);
a controlling assembly (3) fixed to the frame (1);
a controlled assembly (4) electrically connected to the controlling assembly (3); and
a light-emitting board (5, 6, 7) fixed to the frame (1), wherein the game machine is **characterized in** comprising a frame part (51, 61, 71), a refractive plate (52, 62, 72) and a light-emitting assembly (54, 64, 73), wherein the frame part (51, 61, 71) is coupled with the refractive plate (52, 62, 72) and receives the light-emitting assembly (54, 64, 73), wherein the refractive plate (52, 62, 72) comprises a plurality of light-guiding members (524, 624, 724), and wherein the light-emitting assembly (54, 64, 73) comprises a light-emitting face (541, 641, 731) facing a light-receiving edge (523, 623, 723) of the refractive plate (52, 62, 72).

2. The game machine with the light-emitting board as claimed in claim 1, **characterized in that** the refractive plate (52, 62, 72) is made of a light-permeable material mixed with small pieces of metal fragments, and wherein the small pieces of metal fragments form the plurality of light-guiding members (524, 624, 724).

3. The game machine with the light-emitting board as claimed in claim 1, **characterized in that** the refractive plate (52, 62, 72) comprises a first light-permeable material mixed with particle-shaped objects made of a second light-permeable material, wherein the first light-permeable material has a refractive rate different from the second light-permeable material, as well as a melting point lower than the second light-permeable material.

4. The game machine with the light-emitting board as claimed in claim 1, **characterized in that** the light-emitting board (5, 6, 7) further comprises a pattern layer (52, 62, 72) having a light-permeable pattern, wherein the refractive plate (52, 62, 72) comprises a first face (521, 621, 721) and a second face (522, 622, 722) opposite to the first face (521, 621, 721), wherein the light-receiving edge (523, 623, 723) of the refractive plate (52, 62, 72) extends and connects between the first face (521, 621, 721) and the second face (522, 622, 722), and wherein the pattern layer (52, 62, 72) is located on the first face (521, 621, 721) of the refractive plate (52, 62, 72).

5. The game machine with the light-emitting board as claimed in claim 1, **characterized in that** the plurality of light-guiding members (524, 624, 724) is in a form of property-changed regions or hole regions in the refractive plate (52, 62, 72), and wherein the property-changed regions or hole regions are formed by laser engraving technology.

6. The game machine with the light-emitting board as claimed in claim 1, **characterized in that** the light-emitting board (6) further comprises a backboard (65), wherein the refractive plate (62) comprises a first face (621) and a second face (622) opposite to the first face (621), wherein the light-receiving edge (623) of the refractive plate (62) extends and connects between the first and second faces (621, 622), and wherein the backboard (65) is arranged on the second face (622) of the refractive plate (62).
